(19) Europäisches Patentamt
European Patent Office
Office européen des brevets

(11) **EP 2 564 933 B1**

(12) **FASCICULE DE BREVET EUROPEEN**

(45) Date de publication et mention
de la délivrance du brevet:
**22.07.2020 Bulletin 2020/30**

(21) Numéro de dépôt: **12181717.5**

(22) Date de dépôt: **24.08.2012**

(51) Int Cl.:
***B03C 3/86** (2006.01)*  ***B03C 3/70** (2006.01)*
***B03C 3/49** (2006.01)*  ***B03C 3/41** (2006.01)*
***B03C 3/145** (2006.01)*  ***B03C 3/32** (2006.01)*
***F24F 3/16** (2006.01)*

(54) **Dispositif de collecte électrostatique de particules en suspension dans un milieu gazeux**

Elektrostatische Sammelvorrichtung von Partikeln suspendiert in einem gasförmigen Medium

Device for electrostatic collection of particles suspended in a gaseous medium

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.08.2011 FR 1157602**

(43) Date de publication de la demande:
**06.03.2013 Bulletin 2013/10**

(73) Titulaire: **Commissariat à l'Énergie Atomique
et aux Énergies Alternatives
75015 Paris (FR)**

(72) Inventeur: **Roux, Jean-Maxime
38000 Grenoble (FR)**

(74) Mandataire: **Ilgart, Jean-Christophe
BREVALEX
95, rue d'Amsterdam
75378 Paris Cedex 8 (FR)**

(56) Documents cités:
**WO-A1-2007/012447   FR-A1- 2 380 818
FR-A1- 2 915 234   FR-A1- 2 929 860
GB-A- 697 628   US-A- 1 250 088
US-A1- 2008 216 659**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 564 933 B1

## Description

### DOMAINE TECHNIQUE

L'invention concerne un dispositif de collecte électrostatique de particules en suspension dans un milieu gazeux, plus particulièrement humide voire très humide.

Elle a trait plus particulièrement à une solution de maintien d'une électrode de décharge sous la forme d'un fil mince dans la chambre de collecte d'un dispositif de collecte mettant en œuvre un effet de décharge couronne aussi appelé effet corona.

### ART ANTÉRIEUR

La détection et l'analyse des particules présentes dans l'air ambiant constituent une préoccupation actuelle majeure, que ce soit pour la surveillance de l'environnement avec la présence difficilement quantifiable dans l'air ambiant de nanoparticules produites par l'activité humaine, des problématiques de santé avec un besoin évident de protéger les populations des agents pathogènes aéroportés (légionelles, grippe, etc) et des enjeux de sécurité (détection d'attaques biologiques).

De nombreux dispositifs existent pour purifier (épurer) l'air et/ou collecter les particules en suspension dans l'air. Ils sont souvent classés selon le ou les principe(s) physique(s) mis en œuvre pour collecter les particules en suspension initialement dans l'air. Parmi ceux-ci, certains fonctionnent par l'application d'un champ électrique intense pour créer un effet de décharge couronne: ils sont communément appelés électrofiltres ou précipitateurs électrostatiques.

Un électrofiltre (Electrostatic Precipitator en anglais, abbréviation ESP) est un appareil qui collecte les particules présentes dans un gaz en appliquant un champ électrique sur une trajectoire des particules en suspension dans ce gaz. Plus exactement, ce champ électrique, élevé (plusieurs dizaines de milliers de volts par centimètre au voisinage de l'électrode de décharge) est induit par deux électrodes disposées à proximité l'une de l'autre: une première électrode polarisée ou électrode de décharge, généralement en forme de fil ou de pointe, étant disposée en regard d'une deuxième électrode, cette dernière se présentant sous la forme d'une contre-électrode, généralement de géométrie cylindrique. Le champ électrique existant entre les deux électrodes ionise le volume de gaz situé dans l'espace inter-électrodes, et notamment une couronne de gaz située autour de l'électrode de décharge. Ce phénomène est appelé décharge par effet couronne ou effet corona. Les charges créées, en migrant vers la contre électrode, ionisent les particules à capturer. Les particules chargées ainsi créées migrent alors vers la contre-électrode, sur laquelle elles peuvent être collectées. Cette contre-électrode est usuellement appelée électrode de collecte. Ce phénomène est appelé décharge par effet couronne ou effet corona. Du fait de l'intensité du champ électrique requis, il est nécessaire d'utiliser une électrode de décharge qui a un très faible rayon de courbure pour réduire la tension électrique à imposer. Les électrodes de décharge rencontrées sont donc généralement soit des pointes soit des fils.

Mais la mise en œuvre de ce principe physique est délicate tout d'abord car les hautes tensions nécessaires, de plusieurs milliers à plusieurs dizaines de milliers de volts, peuvent conduire à des courts-circuits qui endommagent le dispositif lui-même. En effet, ces dispositifs doivent pouvoir supporter plusieurs contraintes d'utilisation. En premier lieu, l'air dans lequel les particules sont en suspension peut avoir un taux d'humidité élevé : ainsi, les dispositifs doivent pouvoir être utilisés même en atmosphère humide. Ensuite, il est nécessaire de prévoir des nettoyages et éventuellement des décontaminations des dispositifs. Enfin, ces dispositifs doivent pouvoir admettre l'injection d'un liquide comme par exemple de l'eau sous forme de fines gouttelettes, comme décrit par exemple dans les demandes de brevet WO 2004/041412 et WO 00/00291, ou de vapeur, comme décrit par exemple dans la demande WO 2007/012447 pour améliorer leurs performances de collecte et/ou améliorer la récupération proprement dite des particules collectées par effet électrostatique. Ces derniers dispositifs peuvent être appelés électrofiltres humides (lorsqu'on injecte des gouttes dans le gaz traité par le dispositif) ou semi-humides (lorsqu'on injecte de la vapeur dans le dispositif).

La mise en oeuvre de ce principe physique est en outre particulièrement délicate lorsque l'on souhaite réaliser des dispositifs compacts, c'est-à-dire des dispositifs transportables voire portables. En effet, dans des dispositifs compacts, il s'avère délicat d'assurer l'isolation électrique entre électrode de décharge et contre-électrode (électrode de collecte), cette isolation étant usuellement obtenue par éloignement entre elles. Cela est d'autant plus vrai dans le cas des électrofiltres humides.

Pour les raisons évoquées ci-dessus, les électrodes de décharge employées dans les électrofiltres sont généralement des pointes, des associations de pointes, ou des fils :

- les pointes ont l'avantage de n'être maintenues qu'à une de leurs extrémités, mais la décharge couronne étant créée uniquement à leur autre extrémité; il est donc souvent nécessaire d'en utiliser une pluralité au sein d'un même dispositif de collecte. Cela peut nuire à la compacité d'un électrofiltre.
- les conducteurs cylindriques, par exemple filaires, ont l'avantage de créer une zone de décharge couronne sur toute leur longueur, c'est-à-dire sur toute la hauteur de la chambre de collecte.

Lorsque ces conducteurs cylindriques sont suffisamment larges pour avoir une rigidité propre suffisante, leur maintien peut être assuré uniquement en un point en dehors de la chambre de collecte proprement dite et/ou en employant des moyens de maintien de longueur suffisante pour assurer une isolation électrique suffisante. On peut citer ici la demande de brevet WO 00/00291 qui montre le maintien d'un ensemble d'électrodes de décharge 15, 16, 17 supporté par un support 14 lui-même maintenu en un point par une bague isolante 12 à l'extérieur et au dessus de la chambre de collecte 3. On peut citer également la demande de brevet WO 2004/041412 qui présente plusieurs configurations d'électrofiltres dans lesquelles l'électrode de décharge 1 est maintenue dans la chambre de collecte en un point par une bague isolante 2 à l'extérieur et au dessus de la partie d'électrode qui crée l'effet de décharge couronne proprement dit.

Lorsque les conducteurs cylindriques sont trop minces pour ne pas avoir de rigidité propre, il s'avère impératif de les maintenir à leurs deux extrémités. De tels conducteurs minces sont mis en œuvre en tant qu'électrodes de décharge dans des dispositifs que l'on souhaite compacts et/ou lorsque les tensions électriques requises bien que restant élevées doivent être minimisées : les conducteurs cylindriques sont alors qualifiés de fils. On peut citer ici les demandes de brevet WO 2007/012447 et FR 2929860 qui décrivent la possibilité de mettre en œuvre de tels fils en tant qu'électrodes de décharge pour des dispositifs compacts. Ainsi, dans le cadre de l'invention, on entend par électrode de décharge sous la forme d'un fil un élément conducteur électrique de forme allongée typiquement de diamètre compris entre 10 et quelques centaines de $\mu$m et apte à être alimenté sous une tension électrique comprise entre quelques kilovolts (kV) à quelques dizaines de kV.

Il est connu dans le domaine technique des lignes électriques à haute tension exposées aux intempéries, de maintenir celles-ci par des isolateurs en verre ou céramique qui ont en général la forme générale d'une assiette. On les associe entre eux pour former des chaînes d'isolateurs. On trouve aussi des isolateurs sous forme de colonne avec toujours un profil en ailettes pour allonger la ligne de fuite, c'est-à-dire la distance entre les bornes de l'isolateur, mesurée en suivant le profil de l'isolateur. Ces structures éprouvées sont adaptées aux équipements de grandes dimensions. Leur miniaturisation possède une limite technique car la distance entre deux ailettes doit toujours être suffisante pour qu'un pont de conduction électrique ne puisse pas se former entre leurs rebords. L'inventeur pense donc que des isolateurs à ailettes ne peuvent être adaptés pour maintenir efficacement l'isolation électrique entre les électrodes d'un dispositif de collecte électrostatique des particules en suspension dans l'air que l'on souhaite compact, c'est-à-dire transportable ou portable. En effet, lorsque la distance entre deux ailettes est proche ou inférieure à la longueur capillaire, un pont électrique peut se former entre deux ailettes adjacentes. La notion de longueur capillaire est définie ultérieurement.

Par ailleurs, comme mentionné ci-dessus, parmi les contraintes d'utilisation de ces dispositifs figurent la facilité de nettoyage, plus particulièrement pour ceux conçus à des fins d'analyse des particules, et la facilité de décontamination, pour ceux conçus à des fins d'analyses biologiques. Or, les isolateurs à ailettes présentent intrinsèquement une grande surface développée avec notamment des jonctions entre ailettes difficiles d'accès. Autrement dit, l'inventeur pense que de tels isolateurs à ailettes ne peuvent également être adaptés en tant que moyens d'isolation électrique d'électrodes d'un dispositif de collecte électrostatique du fait de leur difficulté à être nettoyés efficacement,

En outre, le fait de disposer des moyens isolants sous la forme de poutres entre les deux électrodes n'est pas suffisant. En effet, L'inventeur a constaté qu'en utilisant de tels moyens sans précaution supplémentaire, un film liquide pouvait se former à la surface de ces moyens. Cela a pour conséquence la formation d'un arc électrique entre ces électrodes, pouvant conduire à une dégradation du dispositif. Aussi, l'expérience a montré qu'en isolant l'électrode centrale de la contre électrode annulaire par de simples poutres isolantes, des arcs électriques se formaient entre l'électrode de décharge et la contre-électrode, par l'intermédiaire d'un film déposé à la surface de ces poutres. L'inventeur a parfois observé une fissuration des moyens isolants.

Comme déjà évoqué, les demandes de brevets WO 2007/012447 et FR 2929860 présentent des dispositifs de collectes électrostatiques compacts, c'est-à-dire pour les rendre transportable voire même portable.

Le document US 1 250 088 décrit un dispositif pour séparer des particules suspendues dans un gaz, comportant des électrodes de décharge entourées par des électrodes de collecte, le gaz circule du bas vers le haut et un film de liquide s'écoule du haut vers le bas sur les électrodes de collecte.

Le but général de l'invention est de proposer un dispositif de collecte par effet électrostatique de particules en suspension dans un milieu gazeux le cas échéant à fort taux d'humidité, qui comprend une électrode de décharge sous la forme d'un fil dont le maintien soit fiable et permette une isolation électrique durable entre l'électrode décharge et l'électrode de collecte, sans que cela ne nuise à la compacité du dispositif ni à la possibilité de l'utiliser selon n'importe quelle orientation physique.

## EXPOSÉ DE L'INVENTION

Pour ce faire, l'invention selon la revendication 1 a pour objet un dispositif de collecte électrostatique de particules en suspension dans un gaz destiné à s'écouler dans ledit dispositif dans la direction des forces gravitationnelles, comprenant :

- une chambre de collecte comportant une ouverture d'entrée, une ouverture de sortie, l'ouverture de sortie étant disposée en aval de ladite ouverture d'entrée par rapport à la direction d'écoulement du gaz, et une paroi de collecte orientée verticalement, dont une partie forme une électrode dite de collecte, ladite électrode de collecte étant disposée en regard d'une électrode de décharge sous la forme d'un fil, de façon à créer une décharge couronne entre elle-même et l'électrode de collecte, ladite paroi de collecte s'étendant à la périphérie de la l'électrode de décharge suivant la longueur au fil formant électrode de décharge, le gaz s'écoulant de l'ouverture d'entrée vers l'ouverture de sortie ;

- des premiers moyens de maintien en matériau(x) isolant électrique pour maintenir le fil par une de ses extrémités dans la chambre,

- au moins une paroi transversale faisant saillie par rapport à ladite paroi périphérique,

- des deuxièmes moyens de maintien en matériau(x) isolant électrique pour maintenir le fil par l'autre de ses extrémités dans la chambre, les deuxièmes moyens de maintien étant disposés en aval de ladite paroi transversale par rapport à la direction d'écoulement du gaz ;

- ladite paroi transversale ayant une forme adaptée pour défléchir la trajectoire d'un liquide destiné à s'écouler sur la paroi de collecte vers ladite paroi transversale de sorte qu'il ne vient pas en contact avec les deuxièmes moyens de maintien.

Avantageusement, la paroi transversale fait saillie par rapport à ladite paroi de collecte selon une distance supérieure à la longueur capillaire du liquide dans le gaz.

On rappelle ici que la longueur capillaire est une dimension caractéristique d'un liquide sur laquelle les forces capillaires et les forces gravitationnelles sont de même grandeurs. Pour l'eau, la longueur capillaire lc a pour valeur :

$$ Lc \sim \sqrt{\frac{\lambda}{\rho \cdot g}} \sim 2.7 \ mm $$

dans laquelle $\lambda$ représente la constante de tension superficielle de l'eau ($\sim$70-73 mJ/m$^2$) ; g l'accélération gravitationnelle et $\rho$ la masse volumique ($\sim$1kg/L). D'une façon générale, dans la majorité des cas de figure, la longueur capillaire sera considérée comprise entre 2 et 10mm, et le plus généralement comprise entre 2 et 5 mm.

En choisissant judicieusement une paroi transversale s'étendant, par rapport à la paroi de collecte de la chambre, d'une distance supérieure à la longueur capillaire de la phase liquide éventuelle au sein du gaz, on diminue les risques d'apparition d'un pont liquide maintenu par les forces capillaires puisqu'on privilégie les forces gravitationnelles. D'une façon préférée, la distance entre la paroi transversale et les deuxièmes moyens de maintien est supérieure à ladite longueur capillaire. Lorsque la paroi transversale est un tube, alors son diamètre intérieur est de préférence tel que la distance séparant le tube de la partie des moyens de maintien le traversant est supérieure à la longueur capillaire de la phase liquide au sein du gaz. Lorsque la paroi transversale est en forme de tube, celui-ci peut être avantageusement biseauté, de telle sorte que la distance entre l'extrémité du tube et la paroi périphérique de collecte de la chambre décroit selon la direction d'écoulement du liquide.

Ainsi, selon l'invention, on définit des moyens de maintien de la deuxième extrémité du fil du côté de la sortie du gaz qui s'étendent ou autrement dit sont suspendus à partir d'une zone en dehors de la chambre de collecte, cette zone propre n'étant pas mouillée par le film liquide éventuel contenant les particules du fait de la déviation, par la paroi transversale, du liquide s'écoulant le long de la paroi de collecte.

Ainsi, lorsqu'un liquide est présent sur la paroi de collecte, on diminue les risques de mouiller les seconds moyens de maintien qui sont du côté de la sortie du milieu gazeux du fait de la présence ladite paroi transversale et donc on diminue les risques de créer un claquage diélectrique de ceux-ci.

Avantageusement, la paroi transversale, délimite une ouverture, dans la paroi de collecte, adaptée pour laisser passer les deuxièmes moyens de maintien et les fixer à distance de la chambre de collecte. Ainsi, on écarte la fixation des moyens de maintien de la zone ionisée et donc même en cas d'entraînement de liquide par capillarité sur la paroi transversale, on diminue encore le risque de claquage diélectrique puisque le liquide entrainé peut au pire mouiller lesdits moyens de maintien uniquement au niveau de leur fixation éloignée de la zone ionisée dans la chambre de collecte.

Selon un mode de réalisation préféré, l'ouverture est reliée à des moyens d'aspiration, ce qui permet d'aspirer le gaz exempt des particules collectées en aval de la chambre de collecte. Ainsi, selon ce mode, non seulement la paroi transversale a pour fonction la déflection du liquide, qui s'écoule le long de la paroi de collecte, vers une zone de collecte proprement dite mais en outre elle sert de guidage du gaz en aval de la chambre de collecte. En outre, le gaz aspiré permet avantageusement d'assécher et/ou d'entrainer d'éventuelles gouttelettes et/ou un éventuel film liquide qui seraient susceptible(s) de mouiller l'intérieur de la paroi transversale et/ou les moyens de maintien qui passent à travers l'ouverture.

Selon un mode de réalisation préféré, la paroi périphérique de collecte est cylindrique, le dispositif comprend un nombre égal à n parois transversales réparties angulairement espacées de 2Π/n et les deuxièmes moyens de maintien sont constitués d'un support central et d'un nombre égal à n poutres de suspension fixées au support central, également réparties angulairement espacées de 2Π/n et qui s'étendent individuellement dans l'espace délimité par chaque paroi transversale. Avantageusement, le nombre n est égal à trois.

Selon un mode de réalisation, un câble d'alimentation de l'électrode de décharge peut être disposé de la même façon que les deuxièmes moyens de maintien. Il peut par exemple être solidaire d'un deuxième moyen de maintien. Ainsi, le deuxième moyen de maintien, outre ses fonctions de maintien mécanique et d'isolation électrique de l'électrode de décharge, agit en tant que support du câble d'alimentation de l'électrode de collecte. Autrement dit, lorsque les deuxièmes moyens de maintien sont constitués d'un support central et de n poutres de suspension fixées au support centrale, au moins une poutre de suspension et le support sont traversés par un conducteur d'alimentation électrique du fil d'électrode de charge.

Avantageusement encore, l'ensemble constitué par une poutre de suspension traversée par un conducteur d'alimentation électrique est constitué par un câble blindé à haute tension isolé en PTFE ou en PvDF. Le matériau isolant électrique des deuxièmes moyens de maintien et/ou de(s) paroi(s) transversale(s) est non mouillant vis-à-vis de la phase liquide du fluide, et de préférence hydrophobe.

L'invention concerne également l'utilisation du dispositif de collecte électrostatique décrit précédemment dans laquelle le gaz est de l'air contenant éventuellement de l'eau sous forme liquide ou vapeur. De préférence, l'utilisation du dispositif est en tant qu'épurateur d'air.

**BRÈVE DESCRIPTION DES DESSINS**

D'autres avantages et caractéristiques de l'invention ressortiront mieux à la lecture de la description détaillée de l'invention faite en référence aux figures suivantes parmi lesquelles :

- la figure 1 est une vue schématique en coupe longitudinale d'un dispositif de collecte électrostatique selon l'invention ;
- la figure 2 est vue schématique en coupe transversale d'un dispositif selon la figure 1.

**EXPOSÉ DÉTAILLÉ DE MODES DE RÉALISATION PARTICULIERS**

Dans la description qui va suivre les termes « entrée », « sortie » « amont », « aval » sont utilisés par référence avec la direction d'aspiration de l'air qui se fait verticalement du haut vers le bas. De même, les termes « supérieur », « inférieur », « au dessus », « au dessous » sont utilisés par référence à l'orientation physique verticale du dispositif de collecte électrostatique tel que représenté sur les figures.

Le dispositif 1 selon l'invention constitue un dispositif de collecte de particules en suspension dans un fluide contenant de l'air en tant que phase gazeuse et donc est un électrofiltre d'épuration de l'air. Dans un tel dispositif, un liquide, par exemple de l'eau ou une solution aqueuse, peut être admis :

- soit de façon simultanée au gaz traité par le dispositif (par exemple sous la forme de vapeur d'eau ou de gouttelettes), et l'on parle alors d'un électrofiltre humide (injection de gouttelettes) ou semi-humide (injection de vapeur),
- soit suite au traitement d'un gaz, et, dans ce cas, le long de la paroi de collecte, afin de recueillir les particules collectées,
- soit préalablement au traitement d'un gaz et, dans ce cas, le long de la paroi de collecte, afin de nettoyer le dispositif avant son utilisation.

Ces différents types d'admission de liquide dans le dispositif (avant traitement, en cours de traitement, suite au traitement) peuvent être cumulés.

Dans tous ces cas de figure, des gouttelettes de liquide, se forment et/ou s'écoulent le long de la paroi de collecte, et, lorsque le liquide est conducteur, il faut éviter que ces gouttelettes ne s'accumulent et forment un pont électrique entre les deux électrodes du dispositif, en surface des moyens de maintien.

Par gaz, on entend un milieu fluide comportant un gaz ou un mélange gazeux, sachant que ce milieu peut également comporter des particules solides ainsi qu'un liquide dispersé sous la forme de gouttelettes ou de vapeur.

Par traitement d'un gaz, on entend l'extraction électrostatique de particules entraînées par ce gaz et leur collecte à l'aide de l'électrode de collecte.

Le dispositif 1 comprend tout d'abord une chambre de collecte 2 avec une ouverture d'entrée 20 en partie supérieure par laquelle de l'air contenant des particules en suspension à collecter pénètre par aspiration depuis une ouverture de sortie 21 en partie inférieure de la chambre. La chambre de collecte 2 est délimitée par une paroi de collecte 3, incluant une première électrode 30 dite électrode de collecte. Lors du fonctionnement du dispositif, cette électrode de collecte 30 peut être mise à la terre. Tel qu'illustré, la paroi de collecte 3 comporte l'électrode de collecte 30 sur toute sa hauteur, mais peut également s'étendre en amont et/ou en aval de cette électrode.

A l'intérieur de la chambre de collecte 2 est agencée une deuxième électrode 4 dite électrode de décharge sous la forme d'un fil. Dans cet exemple, l'électrode de décharge 4 s'étend selon l'axe de l'électrode de collecte 3. La surface de l'électrode de collecte 30 faisant face à la deuxième électrode 4 fait partie de la surface de collecte, car elle est destinée à recevoir les particules séparées par le champ électrique défini entre l'électrode de décharge 4 et l'électrode de collecte annulaire 30. Dans cet exemple, l'électrode de collecte 30 entoure totalement l'électrode de décharge 4, afin d'obtenir une surface de collecte optimale.

L'électrode de collecte 30 peut aussi n'entourer que partiellement l'électrode de décharge 4, en définissant non pas un cylindre mais une portion de cylindre.

L'électrode de collecte 30 peut également être plane, et située en regard de l'électrode de décharge 4.

L'électrode de décharge 4 est typiquement un fil conducteur de diamètre compris entre 10 et quelques centaines de microns ($\mu$m) : Elle est adaptée pour créer une décharge couronne entre elle-même et l'électrode de collecte 3 lorsqu'alimentée sous une tension électrique comprise entre quelques kV et quelques dizaines de kV.

Par exemple, le dispositif représenté peut être un électrofiltre de type humide ou semi-humide dans lequel le gaz à traiter comporte de la vapeur et/ou une phase liquide, par exemple sous forme de gouttelettes. Dans ces différents cas, des gouttelettes sont susceptibles de se former sur la paroi de collecte. Ainsi, lorsque le dispositif est en fonctionnement le gaz contenant des particules en suspension, ainsi que la vapeur et/ou et le liquide employé pour faciliter la capture des particules collectées, pénètre dans la chambre 2 par l'entrée 20 entre l'électrode de décharge 4 et l'électrode de collecte 30. Les particules en suspension dans l'air sont alors collectées sur l'électrode de collecte 30, par décharge couronne et le gaz est évacué, en aval de la chambre de collecte, par les ouvertures de sortie 5 en communication avec la sortie 21 de chambre 2 comme détaillé ci-après.

Comme précédemment décrit, par ajout d'un liquide dispersé sous la forme de gouttelettes ou en phase vapeur, simultanément au gaz, on recueille des gouttelettes, entraînant les particules extraites, sur la paroi de collecte.

On peut également injecter un liquide à la suite du traitement du gaz, afin de former des gouttelettes à la surface de la paroi de collecte, ces gouttelettes entraînant alors les particules extraites lors du traitement.

Du fait de l'absence de rigidité propre suffisante du fil conducteur constituant l'électrode de décharge, il est prévu selon l'invention de le maintenir dans la chambre de collecte 2 d'une part par des premiers moyens de maintien 6 agencés au dessus de l'ouverture d'entrée 20. Ces premiers moyens 6 consistent en un support central 60 en matériau isolant électrique dans lequel l'extrémité supérieure 40 du fil est maintenue, et en des poutres de suspension 61 également en matériau isolant électrique fixées chacune d'une part au support central 60 et d'autre part à un supports périphériques 62 en matériau isolant électrique lui-même fixé en extrémité supérieure de la paroi de collecte 3.

Il est prévu en outre des deuxièmes moyens de maintien 7 agencés en dessous de l'ouverture de sortie 21 de la chambre de collecte 2. Ces deuxièmes moyens 7 consistent en un support central 70 en matériau isolant électrique dans lequel l'extrémité inférieure 41 du fil est maintenue, et en des poutres de suspension 71 également en matériau isolant électrique fixées chacune d'une part au support central 70 et d'autre part à une autre paroi périphérique 80 délimitant un conduit 8 d'évacuation de l'air épuré comme expliqué ci-dessous. De préférence, les conduits d'évacuation 8 sont en matériau(x) isolant électrique.

Plus exactement, on conçoit selon l'invention les deuxièmes moyens de maintien 7 pour que les poutres de suspension 71 s'étendent chacune à l'intérieur d'une ouverture de sortie 5 délimitée par une paroi 9 transversale à la paroi de collecte 3 en aval de la chambre de collecte 2 proprement dite.

La paroi transversale 9, de préférence un tube, ou une portion de tube, de section circulaire ou polygonale, a une forme adaptée pour défléchir la trajectoire des gouttelettes s'écoulant le long de l'électrode de collecte 30, entraînées par gravité et par l'effet d'aspiration jusqu'à ladite paroi transversale 9 de sorte qu'elles ne puissent pas venir directement en contact avec les poutres de suspension 71. Cette paroi transversale, en forme de tube ou de portion de tube, fait saillie de la paroi de collecte, selon une longueur d supérieure ou égale à la longueur capillaire du liquide au sein du fluide.

Lorsque la paroi transversale est en forme de tube, celui-ci peut être avantageusement biseauté, de telle sorte que la distance entre l'extrémité du tube et la paroi périphérique de collecte de la chambre 3 décroit selon la direction d'écoulement du liquide.

De préférence, les supports 60, 70 et les poutres de suspension 61, 71 sont réalisés dans un matériau isolant électrique non mouillant pour le (s) liquide(s) employé(s) dans le dispositif, c'est-à-dire circulant dans la chambre de collecte 2. Dans la mesure où les liquides employés sont souvent des solutions aqueuses, le matériau isolant électrique est avantageusement hydrophobe comme par exemple le polytétrafluoroéthylène (code PTFE) tel que le Téflon®, ou le polyfluorure de vinylidène (code PVDF).

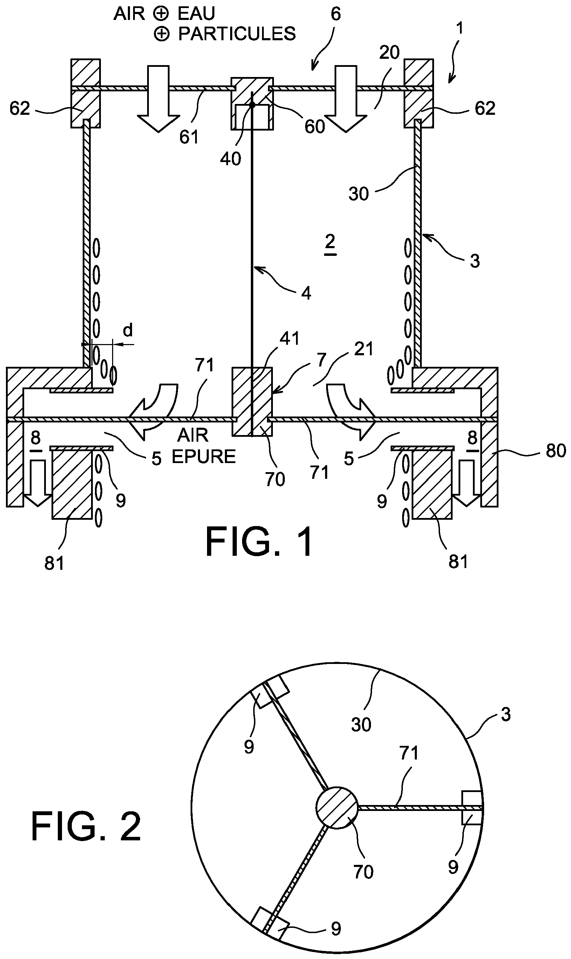

Comme montré en figure 2, les poutres de suspension 71 sont préférentiellement au nombre de trois répartis angulairement à 120° l'une de l'autre et centrent le support central 70 de l'électrode de décharge 4 selon l'axe de la chambre de collecte 2 cylindrique. On peut prévoir pour avoir un montage identique aux deux extrémités 40, 41 du fil d'électrode de décharge 4 un même nombre de poutres de suspension 61 avec le même agencement relatif entre elles et par rapport au support central 60.

De même, les parois transversales 9 sont réalisées de préférence dans un matériau isolant électrique non mouillant pour le(s) liquide(s) employé(s) dans le dispositif, c'est-à-dire circulant dans la chambre de collecte 2. Tout comme les moyens de maintien 7, le matériau isolant électrique constituant les parois transversales 9 est avantageusement hydrophobe comme par exemple le polytétrafluoroéthylène (code PTFE) tel que le Téflon®, ou le polyfluorure de vinylidène (code PVDF).

En fonctionnement du dispositif, l'air épuré ou exempt des particules en suspension initialement est aspiré par les ouvertures de sortie 5 délimités entre tubes 9 et poutres de suspension 71, vers le conduit d'évacuation 8 délimité par les parois 80, 81 et relié à des moyens de pompage (ventilation) non représentés. Autrement dit, on réalise en fonctionnement l'aspiration du gaz purifié à travers les ouvertures 5 délimitées par les tubes 9, ce qui a pour avantage en outre d'assécher éventuellement les poutres de suspension 71.

Afin de limiter la puissance de ceux-ci et incidemment leur niveau de bruit émis, on veille avantageusement à ce que la surface totale des ouvertures de sortie 5 soit suffisamment grande pour ne pas créer une trop grande résistance à l'écoulement de l'air.

Selon un mode de réalisation, un câble d'alimentation de l'électrode de décharge est solidaire d'un deuxième moyen de maintien. Ainsi, le deuxième moyen de maintien, outre ses fonctions de maintien mécanique et d'isolation électrique de l'électrode de décharge, agit en tant que support du câble d'alimentation de l'électrode de collecte. Ainsi selon une variante de réalisation avantageuse, on fait traverser au moins une poutre de suspension 71 par un conducteur d'alimentation électrique du fil 4: il peut s'agir ainsi d'un câble blindé à haute tension HT isolé en PTFE ou en PvDF. Le câble peut également être disposé de la même façon que les deuxièmes éléments de maintien, en étant indépendant (c'est-à-dire non solidaire) de ces derniers.

## Revendications

1. Dispositif (1) de collecte électrostatique de particules en suspension dans un gaz destiné à s'écouler dans ledit dispositif dans la direction des forces gravitationnelles, comprenant :

   - une chambre de collecte (2) comportant une ouverture d'entrée (20), une ouverture de sortie (21), l'ouverture de sortie (21) étant disposée en aval de ladite ouverture d'entrée (20) par rapport à la direction d'écoulement du gaz,
   et une paroi de collecte (3) orientée verticalement, dont une partie (30) forme une électrode dite de collecte, ladite électrode de collecte étant disposée en regard d'une électrode de décharge (4) sous la forme d'un fil, de façon à créer une décharge couronne entre elle-même et l'électrode de collecte, ladite paroi de collecte (3) s'étendant à la périphérie de l'électrode de décharge (4) suivant la longueur du fil formant l'électrode de décharge, le gaz s'écoulant de l'ouverture d'entrée (20) vers l'ouverture de sortie (21) ;
   - des premiers moyens de maintien (6, 60, 61) en matériau(x) isolant électrique pour maintenir le fil par une (40) de ses extrémités dans la chambre,
   - au moins une paroi transversale (9) faisant saillie par rapport à ladite paroi de collecte,
   - des deuxièmes moyens de maintien (7, 70, 71)) en matériau(x) isolant électrique pour maintenir le fil par l'autre (41) de ses extrémités dans la chambre, les deuxièmes moyens de maintien étant disposés en aval de ladite paroi transversale (9) par rapport à la direction d'écoulement du gaz,

   **caractérisée en ce que** ladite paroi transversale (9) a une forme adaptée pour défléchir la trajectoire d'un liquide destiné à s'écouler sur la paroi de collecte vers ladite paroi transversale de sorte qu'il ne vient pas en contact avec les deuxièmes moyens de maintien (7, 70, 71).

2. Dispositif de collecte électrostatique selon la revendication 1, **caractérisé en ce que** la paroi transversale (9) fait saillie par rapport à ladite paroi de collecte (3) selon une distance supérieure à la longueur capillaire du liquide dans le gaz.

3. Dispositif de collecte électrostatique selon la revendication 1 ou 2, **caractérisé en ce qu'**il présente une ouverture (5), dans la paroi de collecte, au niveau de l'espace délimité par la paroi transversale, adaptée pour laisser passer les deuxièmes moyens de maintien et les fixer à distance (80) de la chambre de collecte (2).

4. Dispositif de collecte électrostatique selon la revendication 3, **caractérisé en ce que** l'ouverture (5) est reliée à des moyens d'aspiration.

5. Dispositif de collecte électrostatique selon l'une des revendications précédentes, **caractérisé en ce que** la paroi périphérique de collecte (3) est cylindrique et **en ce que** le dispositif comprend un nombre égal à n parois transversales (9) réparties angulairement espacées de $2\Pi/n$ et **en ce que** les deuxièmes moyens de maintien sont constitués d'un support central (70) et d'un nombre égal à n poutres de suspension (71) fixées au support central, également réparties angulairement espacées de $2\Pi/n$ et qui s'étendent individuellement dans l'espace délimité par chaque paroi transversale.

6. Dispositif de collecte électrostatique selon la revendication 5, **caractérisé en ce que** le nombre n est égal à trois.

7. Dispositif de collecte électrostatique selon la revendication 5 ou 6, **caractérisé en ce que** au moins une poutre de suspension (71) et le support sont traversés par un conducteur d'alimentation électrique du fil d'électrode de charge.

8. Dispositif de collecte électrostatique selon l'une des revendications précédentes, **caractérisé en ce que** le matériau isolant électrique des deuxièmes moyens de maintien et/ou de(s) paroi(s) transversale(s) est non mouillant vis-à-vis de la phase liquide du fluide.

9. Dispositif de collecte électrostatique selon la revendication 8, **caractérisé en ce que** le matériau isolant électrique est hydrophobe.

10. Dispositif de collecte électrostatique selon la revendication 7 en combinaison avec la revendication 9, **caractérisé en ce que** l'ensemble constitué par une poutre de suspension traversée par un conducteur d'alimentation électrique est constitué par un câble blindé à haute tension isolé en PTFE ou en PvDF.

11. Dispositif de collecte électrostatique selon l'une des revendications précédentes, **caractérisé en ce que** chaque paroi transversale est constituée d'un tube (9) de diamètre intérieur tel que la distance séparant le tube de la partie (71) des deuxièmes moyens de maintien le traversant est supérieure à la longueur capillaire de la phase liquide au sein du gaz.

12. Utilisation du dispositif de collecte électrostatique selon l'une quelconque des revendications précédentes dans laquelle le gaz est de l'air contenant éventuellement de l'eau sous forme liquide ou vapeur.

13. Utilisation du dispositif de collecte électrostatique selon la revendication précédente en tant qu'épurateur d'air.

**Patentansprüche**

1. Vorrichtung (1) zum elektrostatischen Auffangen von Teilchen, die in einem Gas suspendiert sind, das in der Vorrichtung in Richtung der Gravitationskräfte strömen soll, enthaltend:

    - eine Auffangkammer (2) mit einer Einlassöffnung (20) und einer Auslassöffnung (21), wobei die Auslassöffnung (21) in Bezug auf die Gasströmungsrichtung stromabwärts der Einlassöffnung (20) angeordnet ist, und eine vertikal ausgerichtete Auffangwand (3), von der ein Teil (30) eine Elektrode, Auffangelektrode genannt, bildet, wobei die Auffangelektrode einer Entladungselektrode (4) in Form eines Drahtes gegenüberliegend so angeordnet ist, dass eine Koronaentladung zwischen dieser und der Auffangelektrode erzeugt wird, wobei sich die Auffangwand (3) am Umfang der Entladungselektrode (4) entlang der Länge des die Entladungselektrode bildenden Drahtes erstreckt, wobei das Gas von der Einlassöffnung (20) zur Auslassöffnung (21) strömt;
    - erste Haltemittel (6, 60, 61) aus elektrisch isolierendem Material/Materialien zum Halten des Drahtes an einem (40) seiner Enden in der Kammer,

    - zumindest eine Querwand (9), die bezüglich der Auffangwand vorspringt,
    - zweite Haltemittel (7, 70, 71) aus elektrisch isolierendem Material/Materialien zum Halten des Drahtes am anderen (41) seiner Enden in der Kammer, wobei die zweiten Haltemittel in Bezug auf die Gasströmungsrichtung stromabwärts der Querwand (9) angeordnet sind,

    **dadurch gekennzeichnet, dass**
    die Querwand (9) eine Form hat, die dazu ausgelegt ist, den Strömungsweg einer Flüssigkeit, die über die Auffangwand fließen soll, in Richtung der Querwand abzulenken, so dass sie nicht mit den zweiten Haltemitteln (7, 70, 71) in Kontakt kommt.

2. Elektrostatische Auffangvorrichtung nach Anspruch 1,
    **dadurch gekennzeichnet, dass**
    die Querwand (9) bezüglich der Auffangwand (3) um einen Abstand vorspringt, der größer ist als die Kapillarlänge der Flüssigkeit im Gas.

3. Elektrostatische Auffangvorrichtung nach Anspruch 1 oder 2,
    **dadurch gekennzeichnet, dass**
    sie im Bereich des von der Querwand begrenzten Raumes eine Öffnung (5) in der Auffangwand aufweist, die dazu ausgelegt ist, die zweiten Haltemittel durchtreten zu lassen und sie in einem Abstand (80) von der Auffangkammer (2) zu befestigen.

4. Elektrostatische Auffangvorrichtung nach Anspruch 3,
    **dadurch gekennzeichnet, dass**
    die Öffnung (5) mit Saugmitteln verbunden ist.

5. Elektrostatische Auffangvorrichtung nach einem der vorangehenden Ansprüche,
    **dadurch gekennzeichnet, dass**
    die umlaufende Auffangwand (3) zylindrisch ist und dass die Vorrichtung eine Anzahl gleich n von Querwänden (9) aufweist, die um 2Π/n winkelmäßig beabstandet sind, und dass
    die zweiten Haltemittel aus einem zentralen Träger (70) und einer Anzahl gleich n von Aufhängungsbalken (71) besteht, die am zentralen Träger befestigt sind, winkelmäßig auch um 2Π/n beabstandet verteilt sind und sich einzeln in dem von jeder Querwand begrenzten Raum erstrecken.

6. Elektrostatische Auffangvorrichtung nach Anspruch 5,
    **dadurch gekennzeichnet, dass**
    die Zahl n gleich drei ist.

7. Elektrostatische Auffangvorrichtung nach Anspruch 5 oder 6,

**dadurch gekennzeichnet, dass**
zumindest ein Aufhängungsbalken (71) und der Träger von einem Stromversorgungsleiter des Lastelektrodendrahtes durchquert sind.

8. Elektrostatische Auffangvorrichtung nach einem der vorangehenden Ansprüche,
**dadurch gekennzeichnet, dass**
das elektrisch isolierende Material der zweiten Haltemittel und/oder der Querwand bzw. Querwände gegenüber der flüssigen Phase des Fluids nicht benetzend ist.

9. Elektrostatische Auffangvorrichtung nach Anspruch 8,
**dadurch gekennzeichnet, dass**
das elektrisch isolierende Material hydrophob ist.

10. Elektrostatische Auffangvorrichtung nach Anspruch 7 in Kombination mit Anspruch 9,
**dadurch gekennzeichnet, dass**
die Anordnung, die aus einem Aufhängungsbalken besteht, der von einem Stromversorgungsleiter durchquert wird, aus einem abgeschirmten Hochspannungskabel, das mit PTFE oder PvDF isoliert ist, besteht.

11. Elektrostatische Auffangvorrichtung nach einem der vorangehenden Ansprüche,
**dadurch gekennzeichnet, dass**
jede Querwand aus einem Rohr (9) mit einem solchen Innendurchmesser besteht, dass der Abstand, der das Rohr von dem Teil (71) der zweiten Haltemittel trennt, der es durchquert, größer ist als die Kapillarlänge der flüssigen Phase im Gas.

12. Verwendung der elektrostatischen Auffangvorrichtung nach einem der vorangehenden Ansprüche, wobei das Gas Luft ist, die gegebenenfalls Wasser in flüssiger oder dampfförmiger Form enthält.

13. Verwendung der elektrostatischen Auffangvorrichtung nach dem vorangehenden Anspruch als Luftreiniger.

**Claims**

1. Electrostatic collection device (1) of particles in suspension in a gas intended to flow in said device in a direction of the gravitational forces, comprising:

   - a collecting chamber (2) comprising a inlet port (20), an outlet port (21), the outlet port (21) being upstream of the inlet port (20) with respect to the gas flow direction, and
   a collecting wall (3), vertically orientated, part of which (30) forms an electrode called collecting electrode, said collecting electrode being arranged facing a discharge electrode (4) in the form of a wire, so as to create a corona discharge between itself and the collecting electrode, said collecting wall (3) extending to the periphery of the discharge electrode (4), the gas flowing from the inlet port (20) to the outlet port (21);
   - first maintaining means (6, 60, 61) made of electrically insulating material(s) to maintain the wire by one (40) of its ends in the chamber,
   - at least one transversal wall (9) protruding with respect to said collecting wall,
   - second maintaining means (7, 70, 71) made of electrically insulating material(s) to maintain the wire by the other (41) of its ends in the chamber, the second maintaining means being arranged downstream of said transversal wall (9) with respect to a flowing direction of the gas,

   **Characterized in that** said transversal wall (9) having a shape adapted to deflect the path of a liquid intended to flow on the collecting wall to said transversal wall such that it does not come into contact with the second maintaining means (7, 70, 71).

2. Electrostatic collection device according to claim 1, **characterized in that** the transversal wall (9) protrudes with respect to said collecting wall (3) along a distance greater than the capillary length of the liquid in the gas.

3. Electrostatic collection device according to claim 1 or 2, **characterized in that** it has an opening (5), in the collecting wall, at the space delimited by the transversal wall, adapted to let pass the second maintaining means and to fix them at a distance (80) from the collecting chamber (2).

4. Electrostatic collection device according to claim 3, **characterized in that** the opening (5) is connected to suction means.

5. Electrostatic collection device according to one of the preceding claims, **characterized in that** the peripheral collecting wall (3) is cylindrical and **in that** the device comprises n transversal walls (9) spread out angularly spaced apart by 2Π/n and **in that** the second maintaining means are constituted of a central support (70) and of n suspension beams (71) fixed to the central support, also spread out angularly spaced apart by 2Π/n and which extend individually in the space delimited by each transversal wall.

6. Electrostatic collection device according to claim 5, **characterized in that** n is equal to three.

7. Electrostatic collection device according to claim 5 or 6, **characterized in that** at least one suspension beam (71) and the support are traversed by an electrical supply conductor of the charging electrode wire.

8. Electrostatic collection device according to one of the preceding claims, **characterized in that** the electrically insulating material of the second maintaining means and/or transversal wall(s) is non wetting vis-à-vis the liquid phase of the fluid.

9. Electrostatic collection device according to claim 8, **characterized in that** the electrically insulating material is hydrophobic.

10. Electrostatic collection device according to claim 7 in combination with claim 9, **characterized in that** the assembly constituted of a suspension beam traversed by an electrical supply conductor is constituted of an insulated high voltage shielded cable made of PTFE or PVDF.

11. Electrostatic collection device according to one of the preceding claims, **characterized in that** each transversal wall is constituted of a tube (9) of internal diameter such that the distance separating the tube from the part (71) of the second maintaining means traversing it is greater than the capillary length of the liquid phase within the gas.

12. Use of the electrostatic collection device according to any of the preceding claims, **characterized in that** the gas is air optionally containing water in liquid or vapour form.

13. Use of the electrostatic collection device according to preceding claim as air purifier.

AIR ⊕ EAU
⊕ PARTICULES

# FIG. 1

# FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004041412 A
- WO 0000291 A
- WO 2007012447 A
- FR 2929860
- US 1250088 A